# EUROPÄISCHE PATENTSCHRIFT

(11) **EP 3 647 579 B1**
(45) Veröffentlichungstag und Bekanntmachung des Hinweises auf die Patenterteilung: **22.09.2021**
(21) Anmeldenummer: 19206473.1
(22) Anmeldetag: 31.10.2019
(51) Int. Cl.: F02M 26/11, F02M 26/70, F16K 1/22, F16C 33/12, C22C 33/02, C22C 38/00, C22C 38/02, C22C 38/04, C22C 38/40, C22C 38/44, C22C 38/46, C22C 38/60

(54) **ABGASKLAPPENVORRICHTUNG FÜR EINE VERBRENNUNGSKRAFTMASCHINE**
EXHAUST FLAP DEVICE FOR AN INTERNAL COMBUSTION ENGINE
DISPOSITIF DE VOLET DE GAZ D'ÉCHAPPEMENT D'UN MOTEUR À COMBUSTION INTERNE

(30) Priorität: 05.11.2018 DE 102018127500
(43) Veröffentlichungstag der Anmeldung: 06.05.2020
(73) Patentinhaber: Pierburg GmbH, 41460 Neuss (DE)
(72) Erfinder: HAMBLOCH, Stephan, 41460 Neuss (DE); SCHNEIDER, Matthias, 41460 Neuss (DE); DORSCH, Christian, 41460 Neuss (DE); EEKHOUT, Robin, 41460 Neuss (DE)
(74) Vertreter: terpatent Patentanwälte ter Smitten Eberlein-Van Hoof Rütten Daubert

(56) Entgegenhaltungen:
- WO-A1-2017/182233
- DE-A1-102007 017 092
- DE-A1-102016 107 266
- JP-A- S4 834 722
- US-A- 4 122 817

## Beschreibung

Die Erfindung betrifft eine Abgasklappenvorrichtung für eine Verbrennungskraftmaschine mit einem Strömungsgehäuse, welches einen Strömungskanal begrenzt, einem Klappenkörper, einer Welle aus einem nichtmagnetischen, austenitischen hochwarmfesten und hochchromhaltigen Edelstahl, auf der der Klappenkörper befestigt ist, und mindestens einem Lager aus einem gesinterten Metallpulver einer hochchromhaltigen Eisenlegierung, welches eine austenitische Struktur aufweist und Karbidlegierungsbestandteile sowie gleichmäßig verteilte Festschmierstoffphasen enthält, über das die Welle in mindestens einer Lageraufnahme des Strömungsgehäuses gelagert ist.

Derartige Abgasklappenvorrichtungen können in Form von Schmetterlingsventilen oder als exzentrische Klappen hergestellt und beispielsweise als Abgasrückführklappe oder Abgasstauklappe eingesetzt werden.

Eine besondere Aufmerksamkeit bei der Konstruktion derartiger Abgasklappenvorrichtungen gilt dabei den verwendeten Lagern, welche einerseits möglichst reibungsfrei arbeiten sollen und andererseits sowohl bei erhöhter thermischer Belastung als auch in der im Abgasbereich vorhandenen aggressiven Umgebung und bei Temperaturschwankungen von -50°C von bis zu 650°C zuverlässig arbeiten müssen. Insbesondere ist dabei auch die Auslegung der Materialpaarung zwischen der Welle und den Lagern von hoher Relevanz, da über die gesamte Lebensdauer der Verschleiß an den Lagern minimiert werden muss, da andernfalls die Führung der Welle in den Lagern verschlechtert wird, was zu einer falschen Positionierung der Klappe beziehungsweise der Welle führen kann und damit zu erhöhten Leckagen im Betrieb und zwar sowohl entlang der Welle nach außen als auch bezüglich der Dichtigkeit des Verschlusses des zu regelnden Kanals. Auch eine Schwergängigkeit der Klappe insbesondere bei auftretenden thermischen Dehnungen kann durch eine unzureichende Lagerung der Klappe durch auftretenden Verschleiß entstehen. Des Weiteren müssen die verwendeten Werkstoffe korrosionsunempfindlich sein und möglichst wenig Anhaftungen beispielsweise durch Ruß oder wasserhaltige Ölnebel zulassen, um ein Verklemmen zuverlässig verhindern zu können. Aufgrund dieser Voraussetzungen werden die meisten Wellen von Abgasklappenvorrichtungen über Gleitlager gelagert.

So wird in der WO 2008/043429 A1 eine Abgasklappenvorrichtung vorgeschlagen, bei der die Welle aus einem martensitischem warmfesten Stahl hergestellt ist und beidseitig in Lagern gelagert wird, welche aus einem keramischen System, insbesondere einem mit Magnesiumoxid stabilisierten Zirkonoxid gefertigt sind. Diese Materialpaarung ist zwar unempfindlich gegen die aggressive Umgebung und die thermischen Bedingungen, jedoch sind die Reibeigenschaften der hier verwendeten keramischen Lager nicht immer ausreichend, so dass erhöhte Stellkräfte aufgebracht werden müssen. Zusätzlich tritt an den harten zueinander gewandten Oberflächen ein erhöhter Verschleiß auf, der zu wachsenden Leckagen durch das Lager, schlechteren Lagerungseigenschaften und vor allem zu einer Verschlechterung der Positioniergenauigkeit der Klappe im Kanal führt.

Des Weiteren ist aus der DE 10 2016 107 266 A1 eine Abgasklappe mit zwei Lagern bekannt, bei der die Welle aus einem nichtmagnetischen, austenitischen hochwarmfesten und hochchromhaltigen Edelstahl besteht, während die Lager aus einem gesinterten Metallpulver einer hochchromhaltigen Eisenlegierung hergestellt sind und eine austenitische Struktur mit Karbidlegierungsbestandteilen und gleichmäßig verteilten Feststoffphasen aufweisen. Die Lager bestehen dabei insbesondere aus 16 Gew.% bis 20 Gew.% Chrom, 16 Gew.% bis 20 Gew.% Nickel, 4,8 Gew.% bis 7 Gew.% Molybdän, 1,1 Gew.% bis 1,4 Gew.% Kohlenstoff, 0,5 Gew.% bis 1,5 Gew.% Silizium, maximal 2 Gew.% weitere Elemente sowie den Rest Eisen. Diese Lagerung weist zwar bereits gute Gleiteigenschaften bei geringer Neigung zu Schwergängigkeit der Klappe und hoher Korrosionsbeständigkeit auf, jedoch kann sich bei hoher Anzahl an Schaltvorgängen ein unerwünschter Verschleiß einstellen, der zu einer Ungenauigkeit bei der Klappenregelung führen kann.

Es stellt sich daher die Aufgabe, eine Abgasklappenvorrichtung zu schaffen, bei der insbesondere der Verschleiß der Paarung Lager und Welle zusätzlich reduziert wird und gleichzeitig die Reibung zwischen den Lagern und der Welle noch einmal reduziert wird, so dass das Lagerspiel über einen langen Zeitraum klein gehalten werden kann. So sollen die Lebensdauer erhöht werden, ein Verklemmen der Welle verhindert werden und Leckagen durch das Lager gleichmäßig klein bleiben. Auch sollen möglichst kleine Stellkräfte benötigt werden, die über die Lebensdauer unverändert klein bleiben sollen. Zusätzlich soll eine hohe Dichtigkeit der Abgasklappe im geschlossenen Zustand und genaue Regelbarkeit über die Lebensdauer erhalten bleiben, was im Abgas eine hohe Korrosionsbeständigkeit voraussetzt.

Diese Aufgabe wird durch eine Abgasklappenvorrichtung für eine Verbrennungskraftmaschine mit den Merkmalen des Hauptanspruchs 1 gelöst.

Das Lager besteht aus einem gesinterten Metallpulver einer hochchromhaltigen Eisenlegierung und weist eine austenitische Struktur mit Karbidlegierungsbestandteilen und gleichmäßig verteilten Festschmierstoffphasen auf. Die Bestandteile dieses Lagers sind erfindungsgemäß 17 Gew.% bis 25 Gew.% Chrom, 7 Gew.% bis 11 Gew.% Nickel, 3 Gew.% bis 6 Gew.% Molybdän, 1,2 Gew.% bis 1,6 Gew.% Kohlenstoff, 0,5 Gew.% bis 1,5 Gew.% Silizium, 0,1 Gew.%-0,4 Gew.% Mangan, 0,1 bis 0,3 Gew.% Schwefel, 0,5 Gew.% bis 1,5 Gew.% Vanadium, 1,3 Gew.% bis 1,8 Gew.% Wolfram, maximal 2 Gew.% weitere Elemente sowie der Rest Eisen. Ein derartiges Lager weist eine extrem hohe Verschleißbeständigkeit bei gleichzeitig hoher Temperaturbeständigkeit und vor allem erhöhter Korrosionsbeständigkeit auf. Die Erhöhung der Korrosionsbeständigkeit ist vor allem auf den zusätzlichen Nickelanteil zurückzuführen. Das Mangan verbessert die Gefügestruktur der Lager, während der zusätzliche Schwefelanteil gleichzeitig die Schmiereigenschaften noch einmal erhöht. Durch das Vanadium in der Legierung wird die Warmfestigkeit zusätzlich erhöht wird, so dass auch Abgastemperaturen von bis zu 650°C nicht zu erhöhtem Verschleiß führen. Das Wolfram in der Legierung in dieser Konzentration führt an den Lagern zu einer weiteren Reduzierung des Verschleißes. Die Welle enthält 16 Gew.% bis 18 Gew.% Chrom, 8 Gew.% bis 9 Gew.% Nickel, 7 Gew.% bis 9 Gew.% Mangan, 3,5 Gew.% bis 4,5 Gew.% Silizium, maximal 0,75 Gew.% Molybdän, maximal 0,1 Gew.% Kohlenstoff, 0,08 Gew.% bis 0,18 Gew.% Stickstoff, sowie den Rest Eisen. So kann eine Materialpaarung mit einem sehr niedrigen Reibungskoeffizienten und hoher Stabilität und Lebensdauer hergestellt werden. Dies hat sich als optimale Materialpaarung zum erfindungsgemäßen Lager ergeben, da dieses Material eine sehr hohe Korrosionsbeständigkeit und Verschleißfestigkeit bei hohen Temperaturschwankungen und somit wechselnden thermischen Belastungen aufweist. Durch die Reduzierung des Verschleißes wird auch die Leckage an der Welle und bei geschlossener Klappe im Kanal auch bei hohen Temperaturschwankungen reduziert. Auch bleibt eine sehr genaue Regelbarkeit durch die Reduzierung des Verschleißes vorhanden. Die Laufzeiten einer derartigen Abgasklappenvorrichtung sind entsprechend hoch.

Auch sollte die Legierung frei von Blei, Quecksilber, Kadmium und hexavalentem Chrom sein, um die gewünschte Oxidationsbeständigkeit und Korrosionsbeständigkeit zu erreichen.

Vorzugsweise enthält das mindestens eine Lager als Festschmierstoff Molybdändisulfid, welches auch bei hohen Temperaturen weiterhin gute Gleiteigenschaften aufweist und korrosions- und oxidationsunempfindlich gegen die Bestandteile des Abgases ist.

Vorzugsweise sind die zwei Lageraufnahmen an zwei gegenüberliegenden Seiten des Strömungskanals im Strömungsgehäuse ausgebildet und der Klappenkörper ist durch die Welle in zwei Klappenhälften geteilt, wobei die Welle in zwei Lagern gelagert ist, die in den Lageraufnahmen angeordnet sind. Es wird somit eine mittig gelagerte Abgasklappenvorrichtung geschaffen, wodurch die auf die Welle wirkenden Querkräfte reduziert werden, da durch die beidseitige Lagerung die auf die Klappe wirkenden Strömungskräfte beidseitig abgefangen werden.

Zur einfachen Betätigung der Welle ist diese an einem aus dem Strömungsgehäuse und durch eines der Lager ragenden axialen Ende mit einem Aktor verbunden. Dies kann beispielsweise auch ein elektromotorischer Aktor sein, der trotz der hohen Temperaturen verwendet werden kann, da die entlang der Welle zwischen Lager und Welle in Richtung des Aktors strömenden Leckagemengen des Abgases durch die Materialkombination verringert werden und somit die thermische Belastung des Aktors reduziert wird.

In einer hierzu weiterführenden vorteilhaften Ausführungsform liegt das am anderen Ende der Welle angeordnete Lager axial mit einer ersten Seite gegen einen Absatz eines Sacklochs an, welches als Lageraufnahme dient, und ist mit seiner entgegengesetzten Seite gegenüberliegend zum Klappenkörper angeordnet. Eine Leckage entlang der Welle nach außen wird vollständig vermieden. Zusätzlich wird ein Verschieben des Lagers im Sackloch verhindert.

Vorzugsweise ist zwischen dem aus dem Strömungsgehäuse ragenden Ende der Welle und dem Lager in einer Bohrung des Strömungsgehäuses eine Dichtungsanordnung ausgebildet, durch welche eine Leckage nach außen an der Seite, an der die Welle aus dem Gehäuse nach außen ragt, zusätzlich verhindert wird. Trotz des nunmehr engen Lagerspiels kann eine Leckage durch die Kombination von Lager und Welle nicht vollständig verhindert werden, so dass an der zum Kanal entgegengesetzten Seite des Lagers die zusätzliche Dichtungsanordnung verwendet wird, um eine Leckage zur Umgebung beziehungsweise zum Aktor weitestgehend auszuschließen.

Es wird somit eine Abgasklappenvorrichtung geschaffen, welche durch die Verwendung optimal aufeinander abgestimmter Materialien eine hohe Lebensdauer der Radiallagerung bei gleichbleibender Qualität aufweist, da ein Verschleiß der Lager und der Welle durch eine unerwünschte erhöhte Reibung in allen Betriebszuständen minimiert wird. Stattdessen wird bei sehr einfachem Aufbau der Abgasklappenvorrichtung eine hohe Dichtigkeit entlang der Welle bei optimierten Gleiteigenschaften, hoher Verschleißfestigkeit und geringem Lagerspiel erreicht, so dass auch die benötigten Stellkräfte über die Lebensdauer gering bleiben. Ein Ausfall der Klappenvorrichtung durch ein Verklemmen der Welle in den Lagern wird entsprechend ebenfalls zuverlässig vermieden. Die Abgasklappenvorrichtung weist eine große Korrosionsunempfindlichkeit auch bei hoher thermischer Belastung und eine aggressiver Umgebung, insbesondere eine hohe chemische Beständigkeit gegen im Abgas vorhandene Schadstoffe, auf. Eine zuverlässige Reibung wird über den gesamten Temperaturbereich sichergestellt.

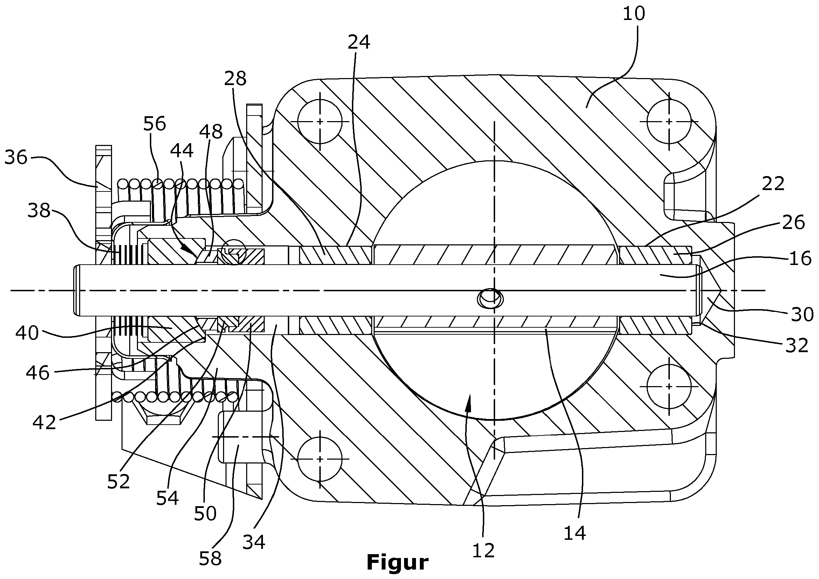

Ein Ausführungsbeispiel einer erfindungsgemäßen Abgasklappenvorrichtung ist in der Figur dargestellt und wird nachfolgend beschrieben.

Die Figur zeigt einen Querschnitt einer erfindungsgemäßen Abgasklappenvorrichtung in geschnittener Darstellung.

Die erfindungsgemäße Abgasklappenvorrichtung besteht aus einem Strömungsgehäuse 10, in dem ein Strömungskanal 12 ausgebildet ist. Ein freier durchströmbarer Querschnitt dieses Strömungskanals 12 wird durch Drehung eines Klappenkörpers 14 im Strömungskanal 12 geregelt. Der Klappenkörper 14 ist hierzu auf einer Welle 16 befestigt, welche beidseitig zentrisch im Strömungsgehäuse 10 gelagert ist, so dass der Klappenkörper 14 durch die Welle 16 in zwei Klappenflügel, die hier Klappenhälften sind, geteilt wird. Zur Lagerung sind am Strömungsgehäuse 10 gegenüberliegende Lageraufnahmen 22, 24 ausgebildet, in denen jeweils ein Lager 26, 28, welches als Radialgleitlager ausgeführt ist, angeordnet ist.

Das eine Ende der Welle 16 ragt in ein Sackloch 30, welches als Lageraufnahme 22 dient und in dem das Lager 26 angeordnet ist. Dieses Lager 26 liegt axial mit seinem einen Ende gegen einen im Sackloch 30 ausgebildeten Absatz 32 an, während das andere Ende des Lagers 26 zum Strömungskanal 12 weist und gegenüberliegend zum Klappenkörper 14 angeordnet ist und sich bis unmittelbar zum Strömungskanal 12 erstreckt.

Das entgegengesetzte Ende der Welle 16 ragt durch eine Bohrung 34 aus dem Strömungsgehäuse 10 nach außen und ist über einen auf dem Ende der Welle 16 befestigten Hebel 36 mit einem nicht dargestellten Aktor gekoppelt, über welchen die Welle 16 mit dem Klappenkörper 14 im Strömungskanal 12 drehbar ist. Die Bohrung 34 bildet die Lageraufnahme 24 aus, welche sich in dem zum Strömungskanal 12 weisenden Bereich der Bohrung 34 befindet, so dass das Lager 28 gegenüberliegend zum Klappenkörper 14 angeordnet ist. Zusätzlich wird die Welle 16 über eine Druckfeder 38, welche sich gegen den Hebel 36 abstützt, in Richtung des Hebels 36 belastet, so dass der Klappenkörper 14 mit seinem die Welle 16 umgebenden Bereich axial in Richtung des Lagers 28 belastet ist.

Das zum Hebel 36 entgegengesetzte Ende der Druckfeder 38 stützt sich gegen ein Axiallager 40 ab, dessen gegenüberliegende Seite gegen einen Absatz 42 anliegt, der in der Bohrung 34 ausgebildet ist, so dass die Federkraft über den Absatz 42 aufgenommen werden kann und die Welle 16 mit dem Klappenkörper 14 gegen das Lager 28 belastet wird. Die zum Strömungskanal 12 weisende Seite des Axiallagers 40, welche Teil einer Dichtungsanordnung 44 ist, weist eine sphärische Ausnehmung 46 auf, die gegen eine korrespondierende Fläche einer Keramikscheibe 48 anliegt, die ebenfalls durch die Kraft der Druckfeder 38 gegen das Axiallager 40 gedrückt wird. Dies erfolgt, indem auf der Welle 16 eine Buchse 50 aus Edelstahl befestigt wird, welche in einem Drehmoment übertragenden Formschluss mit einer Gleitscheibe 52 verbunden ist, die durch die Buchse 50 gegen die Keramikscheibe 48 gedrückt wird, da die Druckfeder 38 die Buchse 50 gegen die Gleitscheibe 52 und diese gegen die Keramikscheibe 48 belastet, welche hierdurch wiederum in die sphärische Ausnehmung des in der Bohrung des Strömungsgehäuses 10 eingepressten Axiallagers 40 gedrückt wird.

Durch diese Dichtungsanordnung 44 kann Abgas aus dem Strömungskanal 12 weder entlang der Welle 16 noch entlang der Innenwand der Bohrung 34 strömen. Auch eine Leckageströmung zwischen der Buchse 50, der Gleitscheibe 52, der Keramikscheibe 48 und dem Axiallager 40 wird vermieden, da diese Teile gegeneinander anliegen und jeweils Reibungspaarungen vorgesehen werden, welche einer geringen Reibung und einem niedrigen Verschleiß unterliegen, so dass über eine lange Lebensdauer die Dichtigkeit erhalten wird. Hierzu sind die Gleitscheibe 52 und das Axiallager 40 beispielsweise aus dem Werkstoff FM 2600^{®} hergestellt, während die Keramikscheibe aus ZN 40, welches ein mit Magnesiumoxid stabilisiertes Zirkonoxid ist, und die Buchse aus Edelstahl 1.4828 hergestellt ist. Eine relative Drehung findet in diesem Fall lediglich zwischen der Welle 16 und dem Axiallager 40 sowie beidseits der Keramikscheibe 48 zur Gleitscheibe 52 und zum Axiallager 40 statt und somit immer zwischen der harten Oberfläche der Keramikscheibe 48 und einem Bauteil mit Festschmierstoffen, welche sich in die oberflächlichen Lücken der Keramikscheibe 48 setzen, so dass die Unebenheiten zwischen den Reibpartnern im Laufe der Zeit geringer werden und eine Schmierung in allen Betriebsbedingungen sichergestellt wird.

Am Strömungsgehäuse 10 ist ein Vorsprung 54 angeordnet, in dem die Dichtungsanordnung 44 sowie die Bohrung 34 ausgebildet sind. Dieser Vorsprung 54 ist von einer Drehfeder 56 umgeben, die als Rückdrehfeder dient und deren Enden am Hebel 36 und an einem Anschlag 58 am Strömungsgehäuse 10 vorgespannt anliegen, so dass die Welle 16 in Schließrichtung des Klappenkörpers 14 vorgespannt ist.

Im Betrieb wird der Klappenkörper 14 durch den im Strömungskanal 12 vorhandenen pulsierenden Abgasdruck mit der Welle 16 jeweils gegen die stromabwärtigen Seiten der Lager 26, 28 belastet. Bei Drehung der Welle 16 zur Regelung des freien Durchströmungsquerschnitts wirken entsprechend erhöhte Kräfte auf die Lager 26, 28, die üblicherweise zu Verschleiß führen, der entsprechend an den stromabwärtigen Enden der Lager 26, 28 höher ist, was dazu führen kann, dass der Klappenkörper 14 mit der Welle 16 im Laufe der Zeit in den Lageraufnahmen 22, 24 verschoben wird. Dies führt zu einer ungenauen Regelung, da keine exakte Lagerückmeldung durch den entstehenden Versatz oder ein leichtes Verkippen der Welle in den Lagern 26, 28 mehr erfolgt.

Entsprechend muss nun sichergestellt werden, dass zwischen der Welle 16 und den Radiallagern 26, 28 der Verschleiß minimiert wird. Dies erfolgt, indem die Welle 16 aus einem nichtmagnetischen, austenitischen, hochwarmfesten und hochchromhaltigen Edelstahl hergestellt wird. Insbesondere kann die Welle 16 beispielsweise aus Nitronic^{®}60 hergestellt werden. Erfindungsgemäß enthält die Welle 16 Gew.% bis 18 Gew.% Chrom, 8 Gew.% bis 9 Gew.% Nickel, 7 Gew.% bis 9 Gew.% Mangan, 3,5 Gew.% bis 4,5 Gew.% Silizium, maximal 0,75 Gew.% Molybdän, maximal 0,1 Gew.% Kohlenstoff, 0,08 Gew.% bis 0,18 Gew.% Stickstoff, sowie den Rest Eisen und weist sehr gute abrasive Verschleißbeständigkeit und Korrosions- und Oxidationsbeständigkeit auf.

Diese Welle 16 wird erfindungsgemäß mit Lagern 26, 28 aus einem gesinterten Metallpulver einer hochchromhaltigen Eisenlegierung gepaart, welches eine austenitische Struktur aufweist und Karbidlegierungsbestandteile sowie gleichmäßig verteilte Festschmierstoffphasen enthält. Die chemische Zusammensetzung dieser Lager 26, 28 ist dabei 17 Gew.% bis 25 Gew.% Chrom, 7 Gew.% bis 11 Gew.% Nickel, 3 Gew.% bis 6 Gew.% Molybdän, 1,2 Gew.% bis 1,6 Gew.% Kohlenstoff, 0,5 Gew.% bis 1,5 Gew.% Silizium, 0,1 Gew.%-0,4 Gew.% Mangan, 0,1 bis 0,3 Gew.% Schwefel, 0,5 Gew.% bis 1,5 Gew.% Vanadium, 1,3 Gew.% bis 1,8 Gew.% Wolfram, maximal 2 Gew.% weitere Elemente sowie den Rest Eisen. Die Legierungsbestandteile Blei, Quecksilber, Cadmium sowie sechswertiges Chrom sind dabei zu vermeiden. Als Festschmierstoffphase dieser Lager dient Molybdändisulfid, welches sich auch bei hohen Temperaturen als Schmierstoff bewährt und sich in die Unebenheiten zwischen der Welle 16 und den Lagern 26, 28 setzt.

Es hat sich gezeigt, dass bei dieser Materialkombination der Verschleiß noch einmal signifikant gesenkt werden konnte und zwar unabhängig von der aggressiven Umgebung des Abgases und der wechselnden thermischen Belastung zwischen -50°C und 650°C. Dabei sorgt vor allem der Nickelanteil für eine deutlich erhöhte Korrosionsbeständigkeit und chemische Beständigkeit. Durch den Schwefelanteil konnte die Gleitfähigkeit zur Welle 16 noch einmal verbessert werden, während durch das Vanadium in diesen Anteilen die Warmfestigkeit verbessert werden konnte. Zusätzlich konnte durch die Zugabe von Mangan die Gefügestruktur der Lager 26, 28 verbessert werden. Durch den Zusatz des Wolframanteils konnte der Verschleiß noch einmal reduziert werden.

Durch diese strukturellen Verbesserungen, geringeren Reibwerte und verringerten Verschleiß kann über die gesamte Lebensdauer die Reibung und der Verschleiß gesenkt werden, so dass eine sehr genaue Regelbarkeit der Abgasklappenvorrichtung erhalten bleibt und entsprechend die notwendigen Stellkräfte zur Verstellung des Klappenkörpers im Kanal sinken, so dass Energie eingespart wird und die Belastung der Steller gesenkt werden können. Zusätzlich zeichnet sich eine derartige Abgasklappenvorrichtung durch das bleibende geringe Lagerspiel und sehr geringe Leckagen sowohl durch den Strömungskanal im geschlossenen Zustand der Abgasklappenvorrichtung als auch entlang der Welle nach außen aus. Die Lager bleiben auch bei hohen Temperaturen selbstschmierend und Welle und Lager weisen eine hohe Korrosionsbeständigkeit und chemische Haltbarkeit auf.

Es sollte deutlich sein, dass die Zusammensetzungen im Rahmen des Hauptanspruchs geringfügig modifizierbar sind. Derartig gelagerte Klappenvorrichtungen können überall im Abgasstrang zur Regelung der geforderten Abgasmenge eingesetzt werden. Denkbar wäre es auch, die Abgasklappenvorrichtung als einseitig gelagerte oder exzentrische Klappe auszuführen.

## Patentansprüche

1. Abgasklappenvorrichtung für eine Verbrennungskraftmaschine mit einem Strömungsgehäuse (10), welches einen Strömungskanal (12) begrenzt,
einem Klappenkörper (14),
einer Welle (16) aus einem nichtmagnetischen, austenitischen hochwarmfesten und hochchromhaltigen Edelstahl, auf der der Klappenkörper (14) befestigt ist,
und mindestens einem Lager (26, 28) aus einem gesinterten Metallpulver einer hochchromhaltigen Eisenlegierung, welches eine austenitische Struktur aufweist und Karbidlegierungsbestandteile sowie gleichmäßig verteilte Festschmierstoffphasen enthält, über das die Welle (16) in mindestens einer Lageraufnahme (22, 24) des Strömungsgehäuses (10) gelagert ist,
**dadurch gekennzeichnet, dass**
das Lager (26, 28) 17 Gew.% bis 25 Gew.% Chrom, 7 Gew.% bis 11 Gew.% Nickel, 3 Gew.% bis 6 Gew.% Molybdän, 1,2 Gew.% bis 1,6 Gew.% Kohlenstoff, 0,5 Gew.% bis 1,5 Gew.% Silizium, 0,1 Gew.%-0,4 Gew.% Mangan, 0,1 bis 0,3 Gew.% Schwefel, 0,5 Gew.% bis 1,5 Gew.% Vanadium, 1,3 Gew.% bis 1,8 Gew.% Wolfram, maximal 2 Gew.% weitere Elemente sowie den Rest Eisen enthält und die Welle 16 Gew.% bis 18 Gew.% Chrom, 8 Gew.% bis 9 Gew.% Nickel, 7 Gew.% bis 9 Gew.% Mangan, 3,5 Gew.% bis 4,5 Gew.% Silizium, maximal 0,75 Gew.% Molybdän, maximal 0,1 Gew.% Kohlenstoff, 0,08 Gew.% bis 0,18 Gew.% Stickstoff, sowie den Rest Eisen enthält.

2. Abgasklappenvorrichtung für eine Verbrennungskraftmaschine nach Anspruch 1,
**dadurch gekennzeichnet, dass** die Legierung des Lagers frei von Blei, Quecksilber Kadmium und hexavalentem Chrom ist.

3. Abgasklappenvorrichtung für eine Verbrennungskraftmaschine nach einem der Ansprüche 1 oder 2,
**dadurch gekennzeichnet, dass**
das Lager (26, 28) als Festschmierstoff Molybdändisulfid enthält.

4. Abgasklappenvorrichtung für eine Verbrennungskraftmaschine nach einem der vorhergehenden Ansprüche,
**dadurch gekennzeichnet, dass**
zwei Lageraufnahmen (22, 24) an zwei gegenüberliegenden Seiten des Strömungskanals (12) im Strömungsgehäuse (10) ausgebildet sind und der Klappenkörper (14) durch die Welle (16) in zwei Klappenhälften geteilt ist, wobei die Welle in zwei Lagern (26, 28) gelagert ist, die in den Lageraufnahmen (22, 24) angeordnet sind.

5. Abgasklappenvorrichtung für eine Verbrennungskraftmaschine nach Anspruch 4,
**dadurch gekennzeichnet, dass**
die Welle (16) an einem aus dem Strömungsgehäuse (10) und durch eines der Lager (28) ragenden axialen Ende mit einem Aktor verbunden ist.

6. Abgasklappenvorrichtung für eine Verbrennungskraftmaschine nach Anspruch 5,
**dadurch gekennzeichnet, dass**
das am anderen Ende der Welle (16) angeordnete Lager (26) axial mit einer ersten Seite gegen einen Absatz (32) eines Sacklochs (30) anliegt, welches als Lageraufnahme (22) dient, und mit seiner entgegengesetzten Seite gegenüberliegend zum Klappenkörper (14) angeordnet ist.

7. Abgasklappenvorrichtung für eine Verbrennungskraftmaschine nach Anspruch 5 oder 6,
**dadurch gekennzeichnet, dass**
zwischen dem aus dem Strömungsgehäuse (10) ragenden Ende der Welle (16) und dem Lager (28) in einer Bohrung (34) des Strömungsgehäuses (10) eine Dichtungsanordnung (44) ausgebildet ist.

## Claims

1. Exhaust flap device for an internal combustion engine comprising
a flow housing (10) that delimits a flow channel (12),
a flap body (14),
a shaft (16) on which the flap body (14) is mounted, the shaft being made of a non-magnetic, austenitic high-temperature-resistant and high-chromium stainless steel,
and at least one bearing (26, 28) made of a sintered metal powder of a high chromium iron alloy, which has an austenitic structure and contains carbide alloy components as well as evenly distributed solid lubricant phases, via which bearing the shaft (16) is supported in at least one bearing seat (22, 24) of the flow housing (10),
**characterized in that**
the bearing (26, 28) contains 17% by weight to 25% by weight chromium, 7% by weight to 11% by weight nickel, 3% by weight to 6% by weight molybdenum, 1.2% by weight to 1.6% by weight carbon, 0,5% by weight to 1.5% by weight silicon, 0.1% by weight to 0.4% by weight manganese, 0.1 to 0.3% by weight sulfur, 0.5% by weight to 1.5% by weight vanadium, 1.3% by weight to 1.8% by weight tungsten, a maximum of 2% by weight of other elements, the remainder being iron, and the shaft contains 16% by weight to 18% by weight chromium, 8% by weight to 9% by weight nickel, 7% by weight to 9% by weight manganese, 3.5% by weight to 4.5% by weight silicon, a maximum of 0.75% by weight molybdenum, a maximum of 0.1% by weight carbon, 0.08% by weight to 0.18% by weight nitrogen, the remainder being iron.

2. Exhaust flap device for an internal combustion engine according to claim 1, **characterized in that** the alloy of the bearing is free of lead, mercury, cadmium and hexavalent chromium.

3. Exhaust flap device for an internal combustion engine according to one of claims 1 or 2, **characterized in that** the bearing (26, 28) contains molybdenum disulfide as the solid lubricant.

4. Exhaust flap device for an internal combustion engine according to one of the preceding claims, **characterized in that** two bearing seats (22, 24) are formed in the flow housing (10) on two opposite sides of the flow channel (12) and the flap body (14) is divided by the shaft (16) into two flap halves, the shaft being supported in two bearings (26, 28) arranged in the bearing seats (22, 24).

5. Exhaust flap device for an internal combustion engine according to claim 4, **characterized in that** the shaft (16) is connected with an actuator at an axial end extending from the flow housing (10) and through one of the bearings (28).

6. Exhaust flap device for an internal combustion engine according to claim 5, **characterized in that** the bearing (26) arranged at the other end of the shaft (16) abuts axially against a shoulder (32) of a blind hole (30) by a first side, said hole serving as a bearing seat (22), and is arranged opposite the valve body (14) on its opposite side.

7. Exhaust flap device for an internal combustion engine according to claim 5 or 6, **characterized in that** a sealing arrangement (44) is formed between the end of the shaft (16) extending from the flow housing (10) and the bearing (28) in a bore (34) of the flow housing (10).

## Revendications

1. Dispositif de clapet d'échappement pour moteur à combustion interne comportant
un carter d'écoulement (10) délimitant un canal d'écoulement (12),
un corps de clapet (14),
un arbre (16) fabriqué d'un acier inoxydable amagnétique, austénitique résistant aux hautes températures et de haute teneur en chrome, sur lequel le corps de clapet (14) est monté,
et au moins un palier (26, 28) fabriqué d'une poudre de métal frittée d'un alliage de fer à teneur élevée en chrome, qui a une structure austénitique et contient des composants en alliage de carbure ainsi que des phases de lubrifiant solide régulièrement réparties, par lequel palier l'arbre (16) es supporté dans au moins un siège de palier (22, 24) du carter d'écoulement (10),
**caractérisé en ce que** le palier (26, 28) contient 17% en poids à 25% en poids de chrome, 7% en poids à 11% en poids de nickel, 3% en poids à 6% en poids de molybdène, 1,2% en poids à 1,6% en poids de carbone, 0,5% en poids à 1,5% en poids de silicium, 0,1% en poids à 0,4% en poids de manganèse, 0,1% en poids à 0,3% en poids de soufre, 0,5% en poids à 1,5% en poids de vanadium, 1,3% en poids à 1,8% en poids de tungstène, un maximum de 2% en poids d'autres éléments et le reste de fer, et l'arbre contient 16% en poids à 18% en poids de chrome, 8% en poids à 9% en poids de nickel, 7% en poids à 9% en poids de manganèse, 3,5% en poids à 4,5% en poids de silicium, un maximum de 0,75% en poids de molybdène, un maximum de 0,1% en poids de carbone, 0,08% en poids à 0,18% en poids d'azote et le reste de fer.

2. Dispositif de clapet d'échappement pour moteur à combustion interne selon la revendication 1, **caractérisé en ce que** l'alliage du palier est exempt de plomb, mercure, cadmium et chrome hexavalent.

3. Dispositif de clapet d'échappement pour moteur à combustion interne selon l'une des revendications 1 ou 2, **caractérisé en ce que** le palier (26, 28) contient du bisulfure de molybdène comme lubrifiant solide.

4. Dispositif de clapet d'échappement pour moteur à combustion interne selon l'une des revendications précédentes, **caractérisé en ce que** deux logements de palier (22, 24) sont formés dans le carter d'écoulement (10) sur deux côtés opposés du canal d'écoulement (12) et le corps de clapet (14) est divisé en deux moitiés de clapet par l'arbre (16), l'arbre étant supporté dans deux paliers (26, 28) disposés dans les logements de palier (22, 24).

5. Dispositif de clapet d'échappement pour moteur à combustion interne selon la revendication 4, **caractérisé en ce que** l'arbre (16) est relié à un actionneur par une extrémité axiale s'étendant du carter d'écoulement (10) et à travers l'un des paliers (28).

6. Dispositif de clapet d'échappement pour moteur à combustion interne selon la revendication 5, **caractérisé en ce que** le palier (26) disposé à l'autre extrémité de l'arbre (16) s'appuie axialement par un premier coté contre un épaulement (32) d'un trou borgne (30) servant de logement de palier (22), et par son côté opposé est disposé opposé au corps de soupape (14).

7. Dispositif de clapet d'échappement pour moteur à combustion interne selon la revendication 5 ou 6, **caractérisé en ce qu'un** ensemble d'étanchéité (44) est formé entre l'extrémité de l'arbre (16) s'étendant du carter d'écoulement (10) et le palier (28) dans un alésage (34) du carter d'écoulement (10).
